# EUROPÄISCHE PATENTSCHRIFT

(11) **EP 3 889 945 B1**
(45) Veröffentlichungstag und Bekanntmachung des Hinweises auf die Patenterteilung: **13.09.2023**
(21) Anmeldenummer: 21160852.6
(22) Anmeldetag: 05.03.2021
(51) Int. Cl.: G08G 1/097, G08G 1/0967, H04W 4/44

(54) **SYSTEM ZUM ÜBERMITTELN VON INFORMATIONEN ÜBER SIGNALZUSTÄNDE EINER LICHTSIGNALANLAGE AN ZUMINDEST EIN AUTONOMES KRAFTFAHRZEUG**
SYSTEM FOR TRANSMITTING INFORMATION ABOUT SIGNAL STATES OF A LIGHT SIGNALLING SYSTEM TO AT LEAST ONE AUTONOMOUS MOTOR VEHICLE
SYSTÈME DE TRANSMISSION DES INFORMATIONS SUR L'ÉTAT DU SIGNAL D'UNE INSTALLATION DE SIGNALISATION LUMINEUSE À AU MOINS UN VÉHICULE AUTONOME

(30) Priorität: 01.04.2020 DE 102020204253
(43) Veröffentlichungstag der Anmeldung: 06.10.2021
(73) Patentinhaber: Yunex GmbH, 81739 München (DE)
(72) Erfinder: Braatz, Robert, 85457 Wörth (DE); Frank, Harald, 85635 Höhenkirchen-Siegertsbrunn (DE); Zelger, Peter, 81241 München (DE); de Zaeyer, Geert, 85570 Markt Schwaben (DE)
(74) Vertreter: Patentanwaltskanzlei WILHELM & BECK

(56) Entgegenhaltungen:
- EP-A1- 3 376 485
- DE-A1-102011 018 571
- DE-A1-102012 216 788
- DE-A1-102017 001 073

## Beschreibung

Die vorliegende Erfindung betrifft ein System zum Übermitteln von Informationen über Signalzustände einer Lichtsignalanlage an zumindest ein autonomes Kraftfahrzeug.

Es ist aus dem Stand der Technik bekannt, Informationen über Signalzustände von Lichtsignalanlagen an autonome Kraftfahrzeuge zu übermitteln. Ein Nachteil bisheriger Systeme zum Übermitteln von Informationen über Signalzustände besteht darin, dass die Übertragung der Informationen ohne Berücksichtigung von Regeln der funktionalen Sicherheit erfolgt. Damit die Signalzustände jedoch für eine automatische Steuerung eines Kraftfahrzeugs berücksichtigt werden können, müssen diese sehr zeitnah, mit einem Hohen Maß an Verlässlichkeit und einer Fehlererkennung übermittelt werden. Aus diesem Grund kann es sein, dass die übermittelten Informationen über die Signalzustände lediglich bedingt zur automatischen Steuerung des autonomen Kraftfahrzeugs berücksichtigt werden können. Folglich kann ein Automatisierungsgrad des autonomen Kraftfahrzeugs beschränkt sein. Der Automatisierungsgrad eines autonomen Kraftfahrzeugs kann beispielsweise gemäß einer international üblichen Klassifizierung, beispielsweise gemäß der Norm SAE J3016, erfolgen. In dieser Norm sind verschiedene Stufen der Autonomie eines Kraftfahrzeugs definiert.

Die Offenlegungsschrift DE 10 2017 001 073 A1 betrifft ein Verfahren zur Verifikation eines Signalzustandes von Lichtsignalanlagen mittels einer Kamera, welche den Signalzustand in einem Fahrzeug erfasst, und mittels einer zumindest mittelbaren Telekommunikation des Signalzustandes an das Fahrzeug. Dabei werden der in dem Fahrzeug erfasste und der an das Fahrzeug kommunizierte Signalzustand verglichen. Im Falle einer Abweichung zwischen dem erfassten und dem kommunizierten Signalzustand erfolgt eine optische und/oder akustische Warnung an eine das Fahrzeug fahrende Person.

Die europäische Patentanmeldung EP 3 376 485 A1 zeigt eine Schaltungsanordnung zur Rückübertragung von Überwachungsdaten eines sich selbst überwachenden Signalgebers einer Lichtsignalanlage. Die Schaltungsanordnung weist eine elektronische drahtgebundene Schnittstelle zum Empfangen von Überwachungsdaten betreffend zu überwachende Funktionseinheiten des Signalgebers von dem Signalgeber auf. Zudem umfasst die Schaltungsanordnung eine Funkeinheit zur Übermittlung der Überwachungsdaten an eine externe Signalgeber-Wartungseinrichtung. Die Schaltungsanordnung weist auch eine Strombegrenzungseinheit, welche dazu eingerichtet ist, einen über die Spannungsversorgungsschnittstelle bezogenen elektrischen Strom auf einen vorbestimmten Maximalwert zu beschränken, und einen wiederaufladbaren elektrischen Energiespeicher zur Energieversorgung der Funkeinheit während eines Sende-/Empfangsbetriebs der Funkeinheit auf.

Eine Aufgabe der vorliegenden Erfindung besteht darin, ein verbessertes System zum Übermitteln von Informationen über Signalzustände einer Lichtsignalanlage an zumindest ein autonomes Kraftfahrzeug bereitzustellen. Diese Aufgabe wird durch ein System zum Übermitteln von Informationen über Signalzustände t einer Lichtsignalanlage an zumindest ein autonomes Kraftfahrzeug mit den Merkmalen des unabhängigen Anspruchs gelöst. Vorteilhafte Ausführungsformen sind in abhängigen Ansprüchen angegeben.

Ein System zum Übermitteln von Informationen über Signalzustände einer Lichtsignalanlage an zumindest ein autonomes

Kraftfahrzeug weist eine Lichtsignalanlage, eine Kommunikationseinrichtung und eine Erfassungseinrichtung auf. Die Lichtsignalanlage weist eine Steuerung, eine Sicherungseinrichtung und zumindest einen Signalgeber auf. Die Erfassungseinrichtung ist Bestandteil des autonomen Kraftfahrzeugs. Die Steuerung ist dazu ausgebildet, der Sicherungseinrichtung in Sollbild eines Signalzustands des Signalgebers der Lichtsignalanlage bereitzustellen. Die Sicherungseinrichtung ist dazu ausgebildet, das Sollbild dem Signalgeber bereitzustellen. Der Signalgeber ist dazu ausgebildet, ein Signal auf Grundlage des Sollbildes zu erzeugen und der Sicherungseinrichtung ein Istbild des Signals bereitzustellen. Die Sicherungseinrichtung ist dazu ausgebildet, das Istbild mit dem Sollbild zu vergleichen, ein das Istbild aufweisendes Datenpaket zu generieren, das Datenpaket der Steuerung bereitzustellen und der Steuerung einen Fehlerzustand zu signalisieren, wenn das Istbild nicht mit dem Sollbild übereinstimmt. Die Steuerung ist dazu ausgebildet, das Datenpaket der Kommunikationseinrichtung bereitzustellen. Die Kommunikationseinrichtung ist dazu ausgebildet, das Datenpaket an die Sicherungseinrichtung und an die Erfassungseinrichtung zu übermitteln. Die Sicherungseinrichtung ist dazu ausgebildet, das von der Steuerung bereitgestellte Sollbild mit dem von der Kommunikationseinrichtung übermittelten Istbild des Datenpakets zu vergleichen und der Steuerung einen Fehlerzustand zu signalisieren, wenn das von der Steuerung bereitgestellte Sollbild und das von der Kommunikationseinrichtung übermittelte Istbild des Datenpakets nicht übereinstimmen.

Vorteilhafterweise ermöglicht es das System, Fehler beim Übermitteln von Informationen über Signalzustände der Lichtsignalanlage an das autonome Kraftfahrzeugs zu erkennen. Dadurch können Signalzustände mit einem hohen Grad an Verlässlichkeit an die Erfassungseinrichtung übermittelt werden, wodurch eine Verfügbarkeit und eine Integrität der Signalzustände steigen können. Dadurch können die an die Erfassungseinrichtung übermittelten Signalzustände für eine automatische Steuerung des autonomen Kraftfahrzeugs verwendet werden, wodurch ein Autonomiegrad des Kraftfahrzeugs steigen kann.

Die Fehlererkennung beruht auf einem Rückkopplungspfad, da von der Sicherungseinrichtung bereitgestellte Datenpakete, die Signalzustände des Signalgebers der Lichtsignalanlage in Form von Istbildern enthalten, von der Kommunikationseinrichtung nicht nur an die Erfassungseinrichtung, sondern auch an die Sicherungseinrichtung übermittelt werden können. Die Sicherungseinrichtung kann auf diese Weise überprüfen, ob ein von der Kommunikationseinrichtung übermitteltes Istbild eines Datenpakets mit dem ursprünglich von der Steuerung bereitgestellten Sollbild übereinstimmt. Zusätzlich ist die Sicherungseinrichtung dazu ausgebildet, das Istbild mit dem Sollbild zu vergleichen. Dadurch wird sichergestellt, dass die Lichtsignalanlage einen dem Sollbild entsprechenden Signalzustand aufweist. Ist dies nicht Fall, signalisiert die Sicherungseinrichtung der Steuerung einen Fehlerzustand.

In einer Ausführungsform ist die Sicherungseinrichtung dazu ausgebildet, eine Laufzeit des Datenpakets zu ermitteln und eine Information über die ermittelte Laufzeit einem nachfolgenden Datenpaket hinzuzufügen. Die Erfassungseinrichtung ist dazu ausgebildet, eine Laufzeit des nachfolgenden Datenpakets auf Grundlage der von der Sicherungseinrichtung ermittelten Laufzeit des vorhergehenden Datenpakets und von der Erfassungseinrichtung ermittelten Ankunftszeiten der Datenpakete zu ermitteln. Die Erfassungseinrichtung ist dazu ausgebildet, die Laufzeit des nachfolgenden Datenpakets mit einem Schwellwert zu vergleichen und einen als unbekannt definierten Signalzustand zu signalisieren, wenn die Laufzeit des nachfolgenden Datenpakets größer ist als der Schwellwert.

Vorteilhafterweise stehen der Erfassungseinrichtung Informationen über Laufzeiten der Datenpakete zur Verfügung. Dadurch kann festgestellt werden, ob Datenpakete mit einer für eine automatische Steuerung des autonomen Kraftfahrzeugs erforderlichen Laufzeit an die Erfassungseinrichtung übermittelt werden. Es wird dabei angenommen, dass ein Übertragungsweg zwischen der Kommunikationseinrichtung und der Sicherungseinrichtung und ein Übertragungsweg zwischen der Kommunikationseinrichtung und der Erfassungseinrichtung gleich lange Übertragungsdauern bewirken.

Da die Sicherungseinrichtung dazu ausgebildet ist eine Laufzeit eines Datenpakets zu ermitteln und eine Information über die Laufzeit einem nachfolgenden Datenpaket hinzuzufügen, steht der Erfassungseinrichtung die Information über die Laufzeit des Datenpaktes erst zur Verfügung, wenn das nachfolgende Datenpaket an die Erfassungseinrichtung übermittelt worden ist. Die Erfassungseinrichtung verwendet neben der Laufzeit des vorhergehenden Datenpakets zum Ermitteln der Laufzeit des nachfolgenden Datenpakets auch einen zeitlichen Abstand zwischen den Ankunftszeiten der Datenpakete bei der Erfassungseinrichtung.

In einer Ausführungsform ist die Sicherungseinrichtung dazu ausgebildet, dem Datenpaket eine Identifikationsnummer hinzuzufügen. Vorteilhafterweise kann dadurch überprüft werden, ob alle Datenpakete in der richtigen Reihenfolge übermittelt worden sind.

In einer Ausführungsform sind die Sicherungseinrichtung und die Erfassungseinrichtung dazu ausgebildet, eine Sequenz von Identifikationsnummern zu überprüfen und der Steuerung einen als unbekannt definierten Zustand zu signalisieren, wenn die Sequenz zumindest abschnittsweise fehlerhaft ist. In einer alternativen Ausführungsform kann alternativ oder zusätzlich auch die Erfassungseinrichtung dazu ausgebildet sein, die Sequenz von Identifikationsnummern zu überprüfen und einen als unbekannt definierten Zustand zu signalisieren, wenn die Sequenz zumindest abschnittsweise fehlerhaft ist.

Vorteilhafterweise kann dadurch beispielsweise erkannt werden, dass eine hinsichtlich einer automatischen Steuerung des autonomen Kraftfahrzeugs kritische Anzahl von aufeinanderfolgenden Datenpaketen nicht an die Erfassungseinrichtung übermittelt worden ist. Ferner kann von der Sicherungseinrichtung und/oder von der Erfassungseinrichtung festgestellt werden, ob die Datenpakete in der richtigen Reihenfolge übermittelt worden sind. Eine fehlerhafte Reihenfolge kann beispielsweise aufgrund von Überholungen von Datenpaketen auftreten. Bei einer geringfügigen Anzahl von Überholungen können die Sicherungseinrichtung und/oder die Erfassungseinrichtung dazu ausgebildet sein, die Reihenfolge der Datenpakete wiederherzustellen.

In einer Ausführungsform ist die Sicherungseinrichtung dazu ausgebildet, der Steuerung Datenpakete zyklisch bereitzustellen und zu überprüfen, ob Datenpakete zyklisch und in einer festgelegten Reihenfolge übermittelt werden. Unter Berücksichtigung der Laufzeiten der Datenpakete ermöglicht dies eine Takt-Synchronisation zwischen der Sicherungseinrichtung und der Erfassungseinrichtung des autonomen Kraftfahrzeugs. Dadurch wird eine gemeinsame Taktbasis zwischen der Lichtsignalanlage und dem autonomen Kraftfahrzeug geschaffen, wodurch Datenpakete auf verlässliche Art und Weise an das autonome Kraftfahrzeug übermittelt werden können. Eine Zeitsynchronisation im Sinne einer Synchronisation von internen Uhren verteilter Komponenten ist damit vorteilhafterweise nicht erforderlich. Die Grundidee besteht vielmehr darin, dass die Sicherungseinrichtung ihren festen Takt, der beispielsweise 100ms betragen kann, an das Kraftfahrzeug oder eine Mehrzahl von Kraftfahrzeugen zu übertragen. Dadurch weisen alle beteiligten Komponenten keine gemeinsame Zeitbasis, aber einen gemeinsamen Zeittakt auf.

In einer Ausführungsform ist die Sicherungseinrichtung dazu ausgebildet, das Bereitstellen von Datenpaketen an die Steuerung einzustellen, wenn zumindest ein von der Steuerung bereitgestelltes Sollbild nicht mit dem entsprechenden vom Signalgeber bereitgestellten Istbild übereinstimmt. Vorteilhafterweise ermöglicht es das System dadurch, dass keine fehlerhaften Signalzustände an das autonome Kraftfahrzeug übermittelt werden. Es ist jedoch möglich, dass zumindest ein Istbild, das nicht mit dem dazugehörigen Sollbild übereinstimmt, der Steuerung und der Kommunikationseinrichtung zum Übermitteln bereitgestellt wird. Erst, wenn zumindest zwei aufeinanderfolgende Istbilder nicht mit ihren dazugehörigen Sollbildern übereinstimmen, stellt die Sicherungseinrichtung das Bereitstellen der Datenpakete ein.

In einer Ausführungsform ist die Sicherungseinrichtung dazu ausgebildet, das Sollbild auf einen sicheren Zustand hin zu überprüfen und im Fall eines als unsicher definierten Zustands zu modifizieren, bevor es dem Signalgeber der Lichtsignalanlage bereitgestellt wird. Die Sicherungseinrichtung ist dazu ausgebildet, im Fall eines als unsicher definierten Zustands das Istbild mit dem modifizierten Sollbild zu vergleichen, ein das Istbild aufweisendes Datenpaket der Steuerung bereitzustellen und der Steuerung einen Fehlerzustand zu signalisieren, wenn das Istbild nicht mit dem modifizierten Sollbild übereinstimmt. Vorteilhafterweise kann die Sicherungseinrichtung das Sollbild beispielsweise auf einen verkehrstechnischen und/oder einen elektrischen Zustand hin überprüfen, bevor es dem Signalgeber bereitgestellt wird. Andere Aspekte können hierbei ebenfalls berücksichtigt werden. Das Istbild aufweisende Datenpaket wird der Steuerung von der Sicherungseinrichtung stets bereitgestellt.

In einer Ausführungsform sind die Sicherungseinrichtung und die Erfassungseinrichtung dazu ausgebildet, empfangene Datenpakete hinsichtlich ihrer Integrität zu überprüfen und einen Fehlerzustand zu signalisieren, wenn die Integritätsprüfung negativ ausfällt. Das Übermitteln der Signalzustände an die Erfassungseinrichtung kann dadurch unter Berücksichtigung von Regeln der funktionalen Sicherheit erfolgen. Vorteilhafterweise kann das System dadurch der Norm IEC 61508 genügen, die sich auf Systeme bezieht, die eine Sicherheitsfunktion ausführen. Entsprechend der Norm IEC 61508 kann das System vorteilhafterweise dem Sicherheits-Integritätslevel 2 oder 3 (SIL 2 oder SIL 3) genügen. Die Erfassungseinrichtung kann vorteilhafterweise der Norm ISO 26262 und einem A-SIL (Automobil Sicherheits-Integritätslevel) entsprechend Teil 9 der Norm ISO 26262 genügen, beispielsweise A-SIL D.

In einer Ausführungsform ist die Sicherungseinrichtung dazu ausgebildet, Informationen über einen als unbekannt definierten Zustand und ein Ergebnis der Integritätsprüfung einem Datenpaket hinzuzufügen. Die Erfassungseinrichtung ist dazu ausgebildet, empfangene Datenpakete für eine automatische Steuerung des autonomen Kraftfahrzeugs zu berücksichtigen, wenn die Sicherungseinrichtung das Bereitstellen der Datenpakete nicht einstellt, die Sicherungseinrichtung und/oder die Erfassungseinrichtung keinen als unbekannt definierten Zustand signalisieren und die Integritätsprüfung positiv ausfällt. Vorteilhafterweise steigt dadurch ein Autonomiegrad des Kraftfahrzeugs.

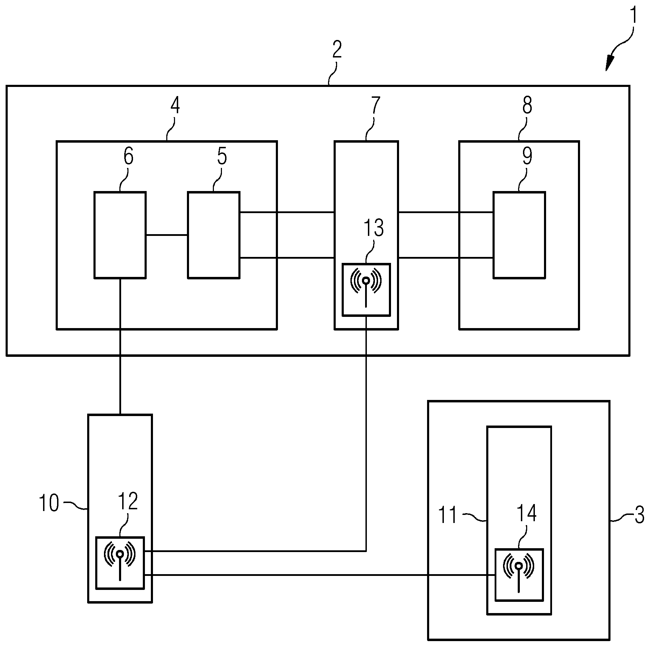

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
FIG 1 ein System zum Übermitteln von Informationen über Signalzustände einer Lichtsignalanlage an ein autonomes Kraftfahrzeug zeigt.

FIG 1 zeigt schematisch ein System 1 zum Übermitteln von Informationen über Signalzustände einer Lichtsignalanlage 2 an ein autonomes Kraftfahrzeug 3.

Mit Aufkommen autonomer Kraftfahrzeuge 3 ergibt sich die Problematik, dass Signalzustände von Lichtsignalanlagen 2 zur Erreichung eines hohen Autonomiegrades des autonomen Kraftfahrzeugs 3 ausgewertet und für eine automatische Steuerung berücksichtigt werden müssen. Damit Informationen über Signalzustände in die automatische Steuerung einfließen können, müssen diese mit einem hohen Grad an Verlässlichkeit und einer Fehlererkennung übermittelt werden.

Das System 1 der FIG 1 weist beispielhaft eine Lichtsignalanlage 2 auf. Das System 1 kann jedoch auch eine beliebige Mehrzahl von Lichtsignalanlagen 2 aufweisen, wenn diese in einer Funkreichweite des autonomen Kraftfahrzeugs 3 sind. Beispielhaft weist das System 1 der FIG 1 lediglich ein autonomes Kraftfahrzeug 3 auf. Das System 1 kann auch eine Mehrzahl von autonomen Kraftfahrzeugen 3 aufweisen. Dies hängt davon ab, wie viele autonome Kraftfahrzeuge 3 sich in einer Funkreichweite der Lichtsignalanlage 2 befinden. Befindet sich kein autonomes Kraftfahrzeug 3 in der Funkreichweite der Lichtsignalanlage 2, so weist das System 1 vorrübergehend kein autonomes Kraftfahrzeug 3 auf. Das autonome Kraftfahrzeug 3 weist eine Erfassungseinrichtung 11 auf. Die Erfassungseinrichtung 11 ist dazu ausgebildet, Datenpakete mit Informationen über Signalzustände der Lichtsignalanlage 2 zu empfangen und auf das Fehlen von Signalzuständen hin einen als unbekannt definierten Zustand zu signalisieren. Vorteilhafterweise ist die Erfassungseinrichtung 11 auch dazu ausgebildet, Informationen über Signalzustände einer Mehrzahl von Lichtsignalanlage 2 zu empfangen Das autonome Kraftfahrzeug 3 kann beispielsweise als Personenkraftwagen oder als Lastkraftwagen ausgebildet sein. Das autonome Kraftfahrzeug 3 ist dazu ausgebildet, automatisch gesteuert zu werden. Damit die Signalzustände bei der automatischen Steuerung berücksichtigt werden können , sollen Signalzustände der Lichtsignalanlage 2 an das autonome Kraftfahrzeug 3 übermittelt werden.

Die Lichtsignalanlage des Systems 1 weist eine Steuerung 4 auf. Die Steuerung 4 ist beispielsweise als Echtzeit Verkehrskontrollsystem (englisch traffic controller, TC) ausgebildet. Die Steuerung 4 weist zumindest einen Prozessor auf.

Die Steuerung 4 kann eine übergeordnete Steuereinheit 5 und eine untergeordnete Steuereinheit 6 aufweisen. In diesem Fall muss lediglich die übergeordnete Steuereinheit 5 als Echtzeit-TC ausgebildet sein, während die untergeordnete Steuereinheit 6 als gewöhnlicher TC ausgebildet sein kann. Es jedoch nicht erforderlich, dass die Steuerung 4 eine übergeordnete Steuereinheit 5 und eine untergeordnete Steuereinheit 6 aufweist.

Die Lichtsignalanlage 2 weist ferner eine Sicherungseinrichtung 7 und zumindest einen Signalgeber 8 auf. Der zumindest eine Signalgeber 8 ist dazu ausgebildet, ein optisches Signal zu erzeugen. Die Lichtsignalanlage 2 kann auch eine Gruppe von Signalgebern 8 aufweisen. Beispielsweise kann die Gruppe Signalgeber 8 aufweisen, die an einer Straßenverkehrskreuzung angeordnet sind und dazu ausgebildet sind, einen Automobilverkehr und/oder einen Fußgängerverkehr zu regulieren.

Die Steuerung 4 ist dazu ausgebildet, der Sicherungseinrichtung 7 ein Sollbild eines Signalzustands des Signalgebers 8 der Lichtsignalanlage 2 bereitzustellen. Das Sollbild enthält den gewünschten Signalzustand des Signalgebers 8 für einen zukünftigen Zeitpunkt, der auf Grundlage eines Signalzeitplans bereitgestellt werden kann. Ein Signalzeitplan umfasst ein Signalprogramm für den Signalgeber 8 der Lichtsignalanlage 2. Beispielsweise kann der Signalzeitplan Informationen über verschiedene Ampelphasen und über Umschaltzeiten zwischen den Ampelphasen aufweisen. Weist das die Lichtsignalanlage 2 eine Gruppe von Signalgebern 8 auf, so enthält der Signalzeitplan eine der Anzahl der Signalgeber 8 entsprechende Anzahl von Signalprogrammen, auf deren Basis die jeweiligen gewünschten Signalzustände der Signalgeber 8 in Form von Sollbildern bereitgestellt werden können. Der Signalzeitplan kann in der Steuerung 4 hinterlegt sein.

Die Sicherungseinrichtung 7 weist zumindest einen Prozessor auf. Die Sicherungseinrichtung 7 kann in einer Ausführungsform dazu ausgebildet sein, das Sollbild auf einen sicheren Zustand hin zu überprüfen und im Fall eines als unsicher definierten Zustands zu modifizieren, bevor es dem Signalgeber 8 der Lichtsignalanlage 2 bereitgestellt wird. Beispielsweise kann die Sicherungseinrichtung 7 dazu ausgebildet sein, das Sollbild daraufhin zu überprüfen, ob ein verkehrstechnisch sicherer Zustand durch das Sollbild dargestellt wird. Die Sicherungseinrichtung 7 ist dazu ausgebildet, im Fall eines als unsicher definierten Zustands ein auf Basis des modifizierten Sollbilds generiertes Istbild mit dem modifizierten Sollbild zu vergleichen und ein das Istbild aufweisendes Datenpaket der Steuerung 4 bereitzustellen. Die Sicherungseinrichtung 7 ist im Fall eines als unsicher definierten Zustands auch dazu ausgebildet, der Steuerung 4 einen Fehlerzustand zu signalisieren, wenn das auf Basis des modifizierten Sollbilds generierte Istbild nicht mit dem modifizierten Sollbild übereinstimmt.

Andere sicherheitsrelevante Aspekte können ebenfalls dabei berücksichtigt werden. Beispielsweise kann die Sicherungseinrichtung 7 auch dazu ausgebildet sein, das Sollbild daraufhin zu überprüfen, ob ein elektrisch sicherer Zustand des Signalgebers 8 bzw. der Lichtsignalanlage 2 durch das Sollbild dargestellt wird. Die Sicherungseinrichtung 7 kann beispielsweise dazu ausgebildet sein, das Sollbild auf insgesamt einhundert verschiedene sicherheitsrelevante Aspekte oder mehr hin zu prüfen. Wird ein unsicherer Zustand von der Sicherungseinrichtung 7 erkannt, so kann die Sicherungseinrichtung 7 das Sollbild derart modifizieren, dass das Sollbild einem sicheren Zustand entspricht.

Die Sicherungseinrichtung 7 ist dazu ausgebildet, das Sollbild oder das modifizierte Sollbild dem Signalgeber 8 bereitzustellen. Der Signalgeber 8 ist dazu ausgebildet, ein optisches Signal auf Grundlage des Sollbildes zu erzeugen. Dazu weist der Signalgeber 8 des System 1 beispielhafteine Schalteinrichtung 9 auf. Die Schalteinrichtung 9 ist dazu ausgebildet, den Signalgeber 8 auf Grundlage des Sollbildes anzusteuern. Der Signalgeber 8 erzeugt das Signal, wobei das Signal ohne Berücksichtigung von Fehlern dem Signalzustand des Sollbilds entspricht. Die Schalteinrichtung 9 muss jedoch nicht notwendigerweise ein Bestandteil des Signalgebers 8 sein.

Der Signalgeber 8 ist dazu ausgebildet, der Sicherungseinrichtung 7 ein Istbild des Signals bereitzustellen. Die Sicherungseinrichtung 7 ist dazu ausgebildet, das Istbild mit dem Sollbild zu vergleichen, ein das Istbild aufweisendes Datenpaket zu generieren und das Datenpaket der Steuerung 4 bereitzustellen. Die Sicherungseinrichtung 7 ist dazu ausgebildet, der Steuerung 4 einen Fehlerzustand zu signalisieren, wenn das Istbild nicht mit dem Sollbild übereinstimmt. Das Datenpaket kann dabei zunächst der übergeordneten Steuereinheit 5 und im Anschluss der untergeordneten Steuereinheit 6 bereitgestellt werden.

Das System 1 weist ferner eine Kommunikationseinrichtung 10 auf. Die Steuerung 4 ist dazu ausgebildet, das von der Sicherungseinrichtung 7 bereitgestellte Datenpaket der Kommunikationseinrichtung 10 bereitzustellen. Die Kommunikationseinrichtung 10 ist dazu ausgebildet, das Datenpaket an die Sicherungseinrichtung 7 und an die Erfassungseinrichtung 11 des Systems 1 zu übermitteln. Dazu weist die Kommunikationseinrichtung 10 einen Sender 12, die Sicherungseinrichtung 7 einen Empfänger 13 und die Erfassungseinrichtung 11 einen weiteren Empfänger 14 auf. Vorteilhafterweise steht dadurch der Erfassungseinrichtung 11 eine einem Signalzustand des Signalgebers 8 der Lichtsignalanlage 2 entsprechende Information zur Verfügung. Die Erfassungseinrichtung 11 kann auch als On-Board Unit (OBU) bezeichnet werden.

Die Kommunikationseinrichtung 10 kann auch als Road-Side Unit (RSU) bezeichnet werden. Die Kommunikationseinrichtung 10 kann auch dazu ausgebildet sein, eine Restrukturierung des Datenpakets vorzunehmen. Beispielsweise kann die Kommunikationseinrichtung 10 dazu ausgebildet sein, das Datenpaket an einen Funkstandard, beispielsweise einen europäischen oder einen amerikanischen Funkstandard, anzupassen. Dies ist jedoch nicht zwingend erforderlich.

Da die Kommunikationseinrichtung 10 dazu ausgebildet ist, das Datenpaket, das das Istbild enthält, nicht nur an die Erfassungseinrichtung 11 des autonomen Kraftfahrzeugs 3 zu übermitteln, sondern auch an die Sicherungseinrichtung 7, umfasst das System 1 somit einen Rückkopplungspfad. Dadurch kann die Sicherungseinrichtung 7 überprüfen, ob ein zu übermittelndes Datenpaket tatsächlich von der Kommunikationseinrichtung 10 übermittelt wurde. Die Sicherungseinrichtung 7 ist dazu ausgebildet, das von der Steuerung 4 bereitgestellte Sollbild mit dem von der Kommunikationseinrichtung 10 übermittelten Istbild des Datenpakets zu vergleichen und der Steuerung 4 einen Fehlerzustand zu signalisieren, wenn das von der Steuerung 4 bereitgestellte Sollbild und das von der Kommunikationseinrichtung 10 übermittelte Istbild des Datenpakets nicht übereinstimmen.

Das System 1 ermöglicht es also, dass Fehler beim Übermitteln von Informationen über Signalzustände der Lichtsignalanlage 2 an das autonome Kraftfahrzeug 3 erkannt werden. Auf diese Weise können Signalzustände auf verlässlichere Art und Weise übermittelt werden. Die Sicherungseinrichtung 7 kann dazu ausgebildet sein, das Bereitstellen des Datenpakets an die Steuerung 4 einzustellen, wenn ein Fehlerzustand von der Sicherungseinrichtung 7 signalisiert wird. Grundfunktionen der Lichtsignalanlage 2, also beispielsweise das Aussenden von Signalen durch den Signalgeber 8, bleiben dabei erhalten.

Neben der Fehlererkennung, die auf dem Rückkopplungspfad beruht, erfolgt auch eine zusätzliche Fehlererkennung, da das Istbild mit dem von der Steuerung 4 bereitgestellten Sollbild von der Sicherungseinrichtung 7 zunächst verglichen wird. Die Sicherungseinrichtung 7 kann dazu ausgebildet sein, das Bereitstellen von Datenpaketen an die Steuerung 4 einzustellen, wenn zumindest ein von der Steuerung 4 bereitgestelltes Sollbild nicht mit dem entsprechenden vom Signalgeber 8 bereitgestellten Istbild übereinstimmt. Grundfunktionen der Lichtsignalanlage 2, also beispielsweise das Aussenden von optischen Signalen, bleiben dabei erhalten.

Die Sicherungseinrichtung 7 kann dazu ausgebildet sein, eine Laufzeit des Datenpakets zu ermitteln. Dazu kann die Sicherungseinrichtung 7 dazu ausgebildet sein, dem Datenpaket einen Zählwert entsprechend einem inkrementierenden Zähler der Sicherungseinrichtung 7 hinzuzufügen, bevor das Datenpaket der Steuerung 4 bereitgestellt wird. Wird das Datenpaket von der Kommunikationseinrichtung 10 an die Sicherungseinrichtung 7 übermittelt, so kann die Sicherungseinrichtung 7 dem empfangenen Datenpaket einen weiteren Zählwert hinzuzufügen. Die Laufzeit des Datenpakets kann nun von der Sicherungseinrichtung 7 ermittelt werden, indem eine Differenz zwischen dem weiteren Zählwert und dem Zählwert gebildet wird. Die ermittelte Laufzeit des Datenpakets ermöglicht es beispielsweise, dass die Sicherungseinrichtung 7 zusätzlich dazu ausgebildet sein kann, zu überprüfen, ob das Datenpaket mit einer erforderlichen Laufzeit übermittelt worden ist.

Die Erfassungseinrichtung 11 muss auf das Fehlen von Signalzuständen nach Ablauf einer bestimmten Zeit reagieren und einen als unbekannt definierten Zustand signalisieren. Hierzu ist die Sicherungseinrichtung 7 dazu ausgebildet eine Information über die ermittelte Laufzeit einem nachfolgenden Datenpaket hinzuzufügen. Die Erfassungseinrichtung 11 ist dazu ausgebildet, eine Laufzeit des nachfolgenden Datenpakets auf Grundlage der von der Sicherungseinrichtung 7 ermittelten Laufzeit des vorhergehenden Datenpakets und von der Erfassungseinrichtung 11 ermittelten Ankunftszeiten der Datenpakete zu ermitteln. Die Erfassungseinrichtung 11 kann hierzu ebenfalls einen inkrementierenden Zähler aufweisen und dazu ausgebildet sein, empfangenen Datenpaketen einen dem inkrementierenden Zähler entsprechenden Zählwert zum Zeitpunkt des Empfangs hinzuzufügen.

Die Erfassungseinrichtung 11 ist ferner dazu ausgebildet, die Laufzeit des nachfolgenden Datenpakets mit einem Schwellwert zu vergleichen und einen als unbekannt definierten Signalzustand zu signalisieren, wenn die Laufzeit des nachfolgenden Datenpakets größer ist als der Schwellwert. Hierbei wird angenommen, dass ein Übertragungsweg zwischen der Kommunikationseinrichtung 10 und der Sicherungseinrichtung 7 und ein Übertragungsweg zwischen der Kommunikationseinrichtung 10 und der Erfassungseinrichtung 11 zeitlich gleich lang sind, da Datenpakete mit Lichtgeschwindigkeit übermittelt werden. Ein Jitter, also eine Varianz der Laufzeiten eines Datenpakets zwischen der Kommunikationseinrichtung 10 und Sicherungseinrichtung 7 und der Kommunikationseinrichtung 10 und der Erfassungseinrichtung 11 kann jedoch auftreten. Es wird angenommen, dass die Übertragungswege transparent sind.

Da die Sicherungseinrichtung 7 dazu ausgebildet ist die Laufzeit des Datenpakets zu ermitteln und eine Information über die Laufzeit dem nachfolgenden Datenpaket hinzuzufügen, steht der Erfassungseinrichtung 11 die Information über die Laufzeit des Datenpaktes erst dann zur Verfügung, wenn das weitere Datenpaket an die Erfassungseinrichtung 11 übermittelt worden ist.

Das System 1 kann auch eine zusätzliche Fehlererkennung umfassen. Dabei ist die Sicherungseinrichtung 7 dazu ausgebildet, dem Datenpaket eine Identifikationsnummer hinzuzufügen. Hierbei kann die Sicherungseinrichtung 7 dazu ausgebildet sein, eine Sequenz von Identifikationsnummern zu überprüfen und der Steuerung 4 einen als unbekannt definierten Signalzustand zu signalisieren, wenn die Sequenz zumindest abschnittsweise fehlerhaft ist. Auf diese Weise kann festgestellt werden, ob alle zu übermittelnden Datenpakete in der richtigen Reihenfolge übermittelt worden sind.

Alternativ kann auch die Erfassungseinrichtung 11 dazu ausgebildet sein, die Sequenz von Identifikationsnummern zu überprüfen und der Steuerung 4 einen als unbekannt definierten Signalzustand zu signalisieren, wenn die Sequenz zumindest abschnittsweise fehlerhaft ist. Ist jedoch die Sicherungseinrichtung 7 hierzu ausgebildet, so kann die Steuerung 4 dazu ausgebildet sein, eine Information über einen als unbekannt definierten und signalisierten Zustand Datenpaketen hinzuzufügen, damit diese Information an die Erfassungseinrichtung 11 übermittelt werden kann.

Die Sicherungseinrichtung 7 kann dazu ausgebildet sein, der Steuerung 4 Datenpakete zyklisch bereitzustellen und zu überprüfen, ob Datenpakete zyklisch und in einer festgelegten Reihenfolge übermittelt werden. Beispielsweise können Datenpakete in einem 100ms Takt von der Sicherungseinrichtung 7 erzeugt und von der Kommunikationseinrichtung 10 an die Sicherungseinrichtung 7 und die Erfassungseinrichtung 111 übermittelt werden. Unter Berücksichtigung der Laufzeiten der Datenpakete ermöglicht dies eine Takt-Synchronisation zwischen der Sicherungseinrichtung 7 und der Erfassungseinrichtung 11 des autonomen Kraftfahrzeugs 3.

Neben der reinen Fehlererkennung kann das System 1 also zusätzlich eine Takt-Synchronisation zwischen der Sicherungseinrichtung 7 und der Erfassungseinrichtung 11 des autonomen Kraftfahrzeugs 3 ermöglichen. Dadurch wird eine gemeinsame Taktbasis für die Lichtsignalanlage 2 und das autonome Kraftfahrzeug 3 geschaffen, wodurch die funktionale Sicherheit des Systems 1 verbessert werden kann.

Die Sicherungseinrichtung 7 und die Erfassungseinrichtung 11 können auch dazu ausgebildet sein, empfangene Datenpakete hinsichtlich ihrer Integrität zu überprüfen und einen Fehlerzustand zu signalisieren, wenn die Integritätsprüfung negativ ausfällt. Ein Aspekt der Integritätsprüfung kann beispielsweise eine zyklische Redundanzprüfung umfassen (englisch cyclic redundancy check, CRC). Dadurch kann das Übermitteln von Informationen über Signalzustände an das autonome Kraftfahrzeug 3 unter Berücksichtigung von Regeln der funktionalen Sicherheit erfolgen. Dadurch können die Sicherungseinrichtung 7 und der Signalgeber 8 der Lichtsignalanlage 2 des Systems 1 der Norm IEC 61508 genügen. Entsprechend der Norm IEC 61508 können die Sicherungseinrichtung 7 und der Signalgeber 8 beispielsweise dem Sicherheits-Integritätslevel 2 oder 3 (SIL 2 oder SIL 3) genügen. Dadurch kann die Erfassungseinrichtung 11 einer A-SIL Zertifizierung entsprechend der Norm ISO 26262 genügen, die Sicherheits-Integritätslevel für den Automobilbereich definiert. Die funktionale Sicherheitsbetrachtung ist dabei im Wesentlichen auf auswertende Komponenten der Sicherungseinrichtung 7 und der Erfassungseinrichtung 11 beschränkt.

Bisherige Systeme zum Übermitteln von Signalzuständen von Lichtsignalanlagen an autonome Kraftfahrzeuge 3 weisen hingegen den Nachteil auf, dass keine nach den Regeln der funktionalen Sicherheit fehlersichere Übertragung von Signalzuständen erfolgt. Signalzustände werden ohne eine Fehlererkennung an autonome Kraftfahrzeuge 3 übermittelt. Aus diesem Grund fließen Signalzustände von Lichtsignalanlagen 2 oftmals nicht in eine automatische Steuerung von autonomen Kraftfahrzeugen 3 ein.

Die Erfassungseinrichtung 11 kann dazu ausgebildet sein, Signalzustände gemäß den übermittelten Istbildern, die in den übermittelten Datenpaketen enthalten sind, für eine automatische Steuerung des autonomen Kraftfahrzeugs 3 zu berücksichtigen. Hierzu ist die Sicherungseinrichtung 7 dazu ausgebildet, Informationen über einen als unbekannt definierten Zustand und ein Ergebnis der Integritätsprüfung einem Datenpaket hinzuzufügen. Die Erfassungseinrichtung 11 ist dazu ausgebildet, empfangene Datenpakete für eine automatische Steuerung des autonomen Kraftfahrzeugs 3 zu berücksichtigen, wenn die Sicherungseinrichtung 7 das Bereitstellen der Datenpakete nicht einstellt, die Sicherungseinrichtung 7 und/oder die Erfassungseinrichtung 11 keinen als unbekannt definierten Zustand signalisieren und die Integritätsprüfung positiv ausfällt. Dadurch kann ein Autonomiegrad des autonomen Kraftfahrzeugs gesteigert werden.

## Patentansprüche

1. System (1) zum Übermitteln von Informationen über Signalzustände einer Lichtsignalanlage (2) an zumindest ein autonomes Kraftfahrzeug (3), mit einer Lichtsignalanlage (2), einer Kommunikationseinrichtung (10) und einer Erfassungseinrichtung (11), wobei die Lichtsignalanlage (2) eine Steuerung (4), eine Sicherungseinrichtung (7) und zumindest einen Signalgeber (8) aufweist, wobei die Erfassungseinrichtung (11) Bestandteil des autonomen Kraftfahrzeugs (3) ist,
wobei die Steuerung (4) dazu ausgebildet ist, der Sicherungseinrichtung (7) ein Sollbild eines Signalzustands des Signalgebers (8) der Lichtsignalanlage (2) bereitzustellen, wobei die Sicherungseinrichtung (7) dazu ausgebildet ist, das Sollbild dem Signalgeber (8) bereitzustellen,
wobei der Signalgeber (8) dazu ausgebildet ist, ein Signal auf Grundlage des Sollbildes zu erzeugen und der Sicherungseinrichtung (7) ein Istbild des Signals bereitzustellen, wobei die Sicherungseinrichtung (7) dazu ausgebildet ist, das Istbild mit dem Sollbild zu vergleichen, ein das Istbild aufweisendes Datenpaket zu generieren, das Datenpaket der Steuerung (4) bereitzustellen und der Steuerung (4) einen Fehlerzustand zu signalisieren, wenn das Istbild nicht mit dem Sollbild übereinstimmt,
wobei die Steuerung (4) dazu ausgebildet ist, das Datenpaket der Kommunikationseinrichtung (10) bereitzustellen,
wobei die Kommunikationseinrichtung (10) dazu ausgebildet ist, das Datenpaket an die Sicherungseinrichtung (7) und an die Erfassungseinrichtung (11) zu übermitteln,
wobei die Sicherungseinrichtung (7) dazu ausgebildet ist, das von der Steuerung (4) bereitgestellte Sollbild mit dem von der Kommunikationseinrichtung (10) übermittelten Istbild des Datenpakets zu vergleichen und der Steuerung (4) einen Fehlerzustand zu signalisieren, wenn das von der Steuerung (4) bereitgestellte Sollbild und das von der Kommunikationseinrichtung (10) übermittelte Istbild des Datenpakets nicht übereinstimmen.

2. System (1) nach Anspruch 1,
wobei die Sicherungseinrichtung (7) dazu ausgebildet ist, eine Laufzeit des Datenpakets zu ermitteln und eine Information über die ermittelte Laufzeit einem nachfolgenden Datenpaket hinzuzufügen,
wobei die Erfassungseinrichtung (11) dazu ausgebildet ist, eine Laufzeit des nachfolgenden Datenpakets auf Grundlage der von der Sicherungseinrichtung (7) ermittelten Laufzeit des vorhergehenden Datenpakets und von der Erfassungseinrichtung (11) ermittelten Ankunftszeiten der Datenpakete zu ermitteln und die Laufzeit des nachfolgenden Datenpakets mit einem Schwellwert zu vergleichen und einen als unbekannt definierten Signalzustand zu signalisieren, wenn die Laufzeit des nachfolgenden Datenpakets größer ist als der Schwellwert.

3. System (1) gemäß einem der vorhergehenden Ansprüche,
wobei die Sicherungseinrichtung (7) dazu ausgebildet ist, dem Datenpaket eine Identifikationsnummer hinzuzufügen.

4. System (1) gemäß Anspruch 3,
wobei die Sicherungseinrichtung (7) und die Erfassungseinrichtung (11) dazu ausgebildet sind, eine Sequenz von Identifikationsnummern zu überprüfen und der Steuerung (4) einen als unbekannt definierten Signalzustand zu signalisieren, wenn die Sequenz zumindest abschnittsweise fehlerhaft ist.

5. System (1) gemäß den Ansprüchen 2 bis 4,
wobei die Sicherungseinrichtung (7) dazu ausgebildet ist, der Steuerung (4) Datenpakete zyklisch bereitzustellen und zu überprüfen, ob Datenpakete zyklisch und in einer festgelegten Reihenfolge übermittelt werden.

6. System (1) gemäß einem der vorhergehenden Ansprüche,
wobei die Sicherungseinrichtung (7) dazu ausgebildet ist, das Bereitstellen von Datenpaketen an die Steuerung (4) einzustellen, wenn zumindest ein von der Steuerung (4) bereitgestelltes Sollbild nicht mit dem entsprechenden vom Signalgeber (8) bereitgestellten Istbild übereinstimmt.

7. System (1) gemäß einem der vorhergehenden Ansprüche, wobei die Sicherungseinrichtung (7) und die Erfassungseinrichtung (11) dazu ausgebildet sind, empfangene Datenpakete hinsichtlich ihrer Integrität zu überprüfen und einen Fehlerzustand zu signalisieren, wenn die Integritätsprüfung negativ ausfällt.

8. System (1) gemäß den Ansprüchen 2 bis 7,
wobei die Sicherungseinrichtung (7) dazu ausgebildet ist, Informationen über einen als unbekannt definierten Zustand und ein Ergebnis der Integritätsprüfung einem Datenpaket hinzuzufügen,
wobei die Erfassungseinrichtung (11) dazu ausgebildet ist, empfangene Datenpakete für eine automatische Steuerung des autonomen Kraftfahrzeugs (3) zu berücksichtigen, wenn die Sicherungseinrichtung (7) das Bereitstellen der Datenpakete nicht einstellt, die Sicherungseinrichtung (7) und/oder die Erfassungseinrichtung (11) keinen als unbekannt definierten Zustand signalisieren und die Integritätsprüfung positiv ausfällt.

9. System (1) gemäß einem der vorhergehenden Ansprüche, wobei die Sicherungseinrichtung (7) dazu ausgebildet ist, das Sollbild auf einen sicheren Zustand hin zu überprüfen und im Fall eines als unsicher definierten Zustands zu modifizieren, bevor es dem Signalgeber (8) der Lichtsignalanlage (2) bereitgestellt wird,
wobei die Sicherungseinrichtung (7) dazu ausgebildet ist, im Fall eines als unsicher definierten Zustands das Istbild mit dem modifizierten Sollbild zu vergleichen, ein das Istbild aufweisendes Datenpaket der Steuerung (4) bereitzustellen und der Steuerung (4) einen Fehlerzustand zu signalisieren, wenn das Istbild nicht mit dem modifizierten Sollbild übereinstimmt.

## Claims

1. System (1) for transmitting information relating to signal states of a light signal system (2) to at least one autonomous motor vehicle (3), having a light signal system (2), a communication device (10) and a capture device (11), wherein the light signal system (2) has a controller (4), a safety device (7) and at least one signal generator (8), wherein the capture device (11) is part of the autonomous motor vehicle (3),
wherein the controller (4) is designed to provide the safety device (7) with a target image of a signal state of the signal generator (8) of the light signal system (2),
wherein the safety device (7) is designed to provide the signal generator (8) with the target image,
wherein the signal generator (8) is designed to generate a signal on the basis of the target image and to provide the safety device (7) with an actual image of the signal, wherein the safety device (7) is designed to compare the actual image with the target image, to generate a data packet having the actual image, to provide the controller (4) with the data packet and to signal an error state to the controller (4) if the actual image does not match the target image,
wherein the controller (4) is designed to provide the communication device (10) with the data packet,
wherein the communication device (10) is designed to transmit the data packet to the safety device (7) and to the capture device (11),
wherein the safety device (7) is designed to compare the target image provided by the controller (4) with the actual image of the data packet transmitted by the communication device (10) and to signal an error state to the controller (4) if the target image provided by the controller (4) and the actual image of the data packet transmitted by the communication device (10) do not match.

2. System (1) according to Claim 1,
wherein the safety device (7) is designed to determine a transit time of the data packet and to add information relating to the determined transit time to a subsequent data packet,
wherein the capture device (11) is designed to determine a transit time of the subsequent data packet on the basis of the transit time of the preceding data packet determined by the safety device (7) and arrival times of the data packets determined by the capture device (11) and to compare the transit time of the subsequent data packet with a threshold value and to signal a signal state defined as unknown if the transit time of the subsequent data packet is greater than the threshold value.

3. System (1) according to one of the preceding claims, wherein the safety device (7) is designed to add an identification number to the data packet.

4. System (1) according to Claim 3,
wherein the safety device (7) and the capture device (11) are designed to check a sequence of identification numbers and to signal a signal state defined as unknown to the controller (4) if at least sections of the sequence are incorrect.

5. System (1) according to Claims 2 to 4,
wherein the safety device (7) is designed to cyclically provide the controller (4) with data packets and to check whether data packets are transmitted cyclically and in a defined order.

6. System (1) according to one of the preceding claims, wherein the safety device (7) is designed to suspend the provision of data packets to the controller (4) if at least one target image provided by the controller (4) does not match the corresponding actual image provided by the signal generator (8).

7. System (1) according to one of the preceding claims, wherein the safety device (7) and the capture device (11) are designed to check the integrity of received data packets and to signal an error state if the integrity check is negative.

8. System (1) according to Claims 2 to 7,
wherein the safety device (7) is designed to add information relating to a state defined as unknown and a result of the integrity check to a data packet,
wherein the capture device (11) is designed to take into account received data packets for automatic control of the autonomous motor vehicle (3) if the safety device (7) does not suspend the provision of the data packets, the safety device (7) and/or the capture device (11) do(es) not signal a state defined as unknown and the integrity check is positive.

9. System (1) according to one of the preceding claims, wherein the safety device (7) is designed to check the target image for a safe state and, in the event of a state defined as unsafe, to modify it before it is made available to the signal generator (8) of the light signal system (2),
wherein, in the event of a state defined as unsafe, the safety device (7) is designed to compare the actual image with the modified target image, to provide the controller (4) with a data packet having the actual image and to signal an error state to the controller (4) if the actual image does not match the modified target image.

## Revendications

1. Système (1) de communication d'informations à propos d'états de signal d'une installation de signalisation lumineuse (2) à au moins un véhicule automobile autonome (3), comprenant une installation de signalisation lumineuse (2), un dispositif de communication (10) et un dispositif de détection (11), l'installation de signalisation lumineuse (2) possédant une commande (4), un dispositif de sécurité (7) et au moins un transmetteur de signal (8), le dispositif de détection (11) étant un élément constitutif du véhicule automobile autonome (3),
la commande (4) étant configurée pour fournir au dispositif de sécurité (7) une image de consigne d'un état de signal du transmetteur de signal (8) de l'installation de signalisation lumineuse (2),
le dispositif de sécurité (7) étant configuré pour fournir l'image de consigne au transmetteur de signal (8),
le transmetteur de signal (8) étant configuré pour générer un signal sur la base de l'image de consigne et pour fournir au dispositif de sécurité (7) une image réelle du signal,
le dispositif de sécurité (7) étant configuré pour comparer l'image réelle avec l'image de consigne, générer un paquet de données qui présente l'image réelle, fournir le paquet de données à la commande (4) et signaler à la commande (4) un état de défaut lorsque l'image réelle ne coïncide pas avec l'image de consigne, la commande (4) étant configurée pour fournir le paquet de données au dispositif de communication (10),
le dispositif de communication (10) étant configuré pour communiquer le paquet de données au dispositif de sécurité (7) et au dispositif de détection (11),
le dispositif de sécurité (7) étant configuré pour comparer l'image de consigne fournie par la commande (4) avec l'image réelle communiquée par le dispositif de communication (10) et signaler à la commande (4) un état de défaut lorsque l'image de consigne fournie par la commande (4) et l'image réelle communiquée par le dispositif de communication (10) ne coïncident pas.

2. Système (1) selon la revendication 1,
le dispositif de sécurité (7) étant configuré pour déterminer un temps de propagation du paquet de données et ajouter une information à propos du temps de propagation déterminé à un paquet de données suivant,
le dispositif de détection (11) étant configuré pour déterminer un temps de propagation du paquet de données suivant sur la base du temps de propagation du paquet de données précédent déterminé par le dispositif de sécurité (7) et les temps d'arrivée des paquets de données déterminés par le dispositif de détection (11) et comparer le temps de propagation du paquet de données suivant avec une valeur de seuil et signaler un état de signal défini comme étant inconnu lorsque le temps de propagation du paquet de données suivant est supérieur à la valeur de seuil.

3. Système (1) selon l'une des revendications précédentes,
le dispositif de sécurité (7) étant configuré pour ajouter un numéro d'identification au paquet de données.

4. Système (1) selon la revendication 3,
le dispositif de sécurité (7) et le dispositif de détection (11) étant configurés pour vérifier une séquence de numéros d'identification et signaler à la commande (4) un état de signal défini comme étant inconnu lorsque la séquence est erronée au moins dans certaines portions.

5. Système (1) selon les revendications 2 à 4,
le dispositif de sécurité (7) étant configuré pour fournir des paquets de données à la commande (4) de manière cyclique et pour vérifier si les paquets de données sont communiqués de manière cyclique et dans un ordre spécifié.

6. Système (1) selon l'une des revendications précédentes,
le dispositif de sécurité (7) étant configuré pour cesser la fourniture de paquets de données à la commande (4) lorsqu'au moins une image de consigne fournie par la commande (4) ne coïncide pas avec l'image réelle correspondante fournie par le transmetteur de signal (8).

7. Système (1) selon l'une des revendications précédentes,
le dispositif de sécurité (7) et le dispositif de détection (11) étant configurés pour vérifier l'intégrité des paquets de données reçus et signaler un état de défaut lorsque la vérification de l'intégrité produit un résultat négatif.

8. Système (1) selon l'une des revendications 2 à 7, le dispositif de sécurité (7) étant configuré pour ajouter à un paquet de données des informations à propos d'un état défini comme étant inconnu et le résultat de la vérification de l'intégrité,
le dispositif de détection (11) étant configuré pour tenir compte des paquets de données reçus pour une commande automatique du véhicule automobile autonome (3) lorsque le dispositif de sécurité (7) ne cesse pas la fourniture des paquets de données, le dispositif de sécurité (7) et/ou le dispositif de détection (11) ne signalent aucun état défini comme étant inconnu et la vérification de l'intégrité produit un résultat positif.

9. Système (1) selon l'une des revendications précédentes,
le dispositif de sécurité (7) étant configuré pour vérifier si l'image de consigne présente un état sécurisé et la modifier dans le cas d'un état défini comme non sécurisé avant qu'elle soit fournie au transmetteur de signal (8) de l'installation de signalisation lumineuse (2),
le dispositif de sécurité (7) étant configuré pour, dans le cas d'un état défini comme non sécurisé, comparer l'image réelle avec l'image de consigne modifiée, fournir à la commande (4) un paquet de données qui présente l'image réelle et signaler à la commande (4) un état de défaut lorsque l'image réelle ne coïncide pas avec l'image de consigne modifiée.
